# EUROPÄISCHE PATENTANMELDUNG

(11) **EP 1 798 212 A2**
(43) Veröffentlichungstag der Anmeldung: **20.06.2007**
(21) Anmeldenummer: 06021456.6
(22) Anmeldetag: 13.10.2006
(51) Int. Cl.: C05B 13/00, C05F 11/00, C05F 9/04, C05D 9/00

(54) **Pyrophosphat enthaltendes Präparat zur Bodenverbesserung und Düngung**

(30) Priorität: 19.12.2005 DE 102005061117
(71) Anmelder: Tilco Biochemie GmbH, 23858 Reinfeld (DE)
(72) Erfinder: Scharafat, Iradj, 23843 Travenbrück (DE)
(74) Vertreter: Klickow, Hans-Henning

(57) **Zusammenfassung**

Das Präparat dient zur Bodenverbesserung und Düngung und enthält mindestens eine anorganische erste Komponente und mindestens eine organische zweite Komponente. Die erste Komponente weist mindestens einen Anteil von Pyrophosphat auf.

## Beschreibung

Die Erfindung betrifft ein Präparat zur Bodenverbesserung und Düngung, das mindestens eine anorganische erste Komponente und mindestens eine organische zweite Komponente enthält.

Die Erfindung betrifft insbesondere auch Präparate (Pyrophosphate K-, NH4-, Na-, Al- u. andere Alkali-P207 und Erdalkalimetalle-P207) für die Erhöhung der Resistenz der Pflanzen gegen Pilzkrankheiten, zur Verbesserung des Verdunstungsschutzes sowie zur optimalen Ernährung der Pflanzen mit Nährstoffen und Schutz vor Pflanzenkrankheiten, die aus K4P207 (Kaliumpyrophosphat), HH4)4P2O7 (Ammoniumpyrophosphat), Na4P207 (Natriumpyrophosphat), Al- und anderen Pyrophosphaten (P207) alleine oder zu mindestens aus einer ersten Komponente und einer zur ersten Komponente unterschiedlichen zweiten Komponente zusammengesetzt sind und bei denen sich die zweite Komponente als eine Verbindung aus der Gruppe der Phosphate (Kalium-, Ammonium-, Natriumu. andere pyrophosphate), der Polyphosphate, der Phosphite, der Phosphonate, der Polyphosphorsäure, der Salze der Pholyphosphorsäure, der Phosphorigen Säuren, der Phosphorsäure sowie der Salze der Phosphorigen Säuren und (oder) Phosphorsäure, Stickstoffsalze der Amonium , Nitrite, Nitrate, Amide, Amine, Harnstoffverbindungen, Methylurea und Ammoniak, Amoniumlauge, Salpetersäure und deren Salze, Kalium, Kaliumsalze Kaliumoxid, Kaliumhydroxid, Kaliumsalze, Kaliumnitrat, Kaliumsulfat, Kaliumthiosulfat, Amoniumthiosulfat (auch andere Thiosulfate), Kaliumsulfid, Amoniumsulfid, Kaliumchlorid, Kalium- Magnesium-Salze, Magnesiumsalze, Magnesiumsulfat, Magnesiumnitrat, Magnesiumcarbonat, Magnesium und Kalziumcarbonat, Eisensulfat zwei- und dreiwertig, Eisenchlorid, Eisennitrat, Eisencarbonat, realisiert , sowie bei denen die erste Komponente mit oder ohne organische Verbindungen realisiert ist, die mindestens zu einem Teil aus mindestens einer Aminosäure sowie zu einem Teil aus mindestens einem Algenmehl-Extrakt nicht aufgeschlossen oder (und) aufgeschlossene Algenmehle (mit Natriumoxid, -hydroxid, Carbonate oder und andere Salze oder Kaliumoxid, -hydroxid, -carbonate oder und anderer Salze bzw. Alkalimetalle behandelt und aufgeschlossen), Schwefel, Schwefelsäure, Schwefelsalze Eisensulfat, Eisenchlorid, Eisencarbonat, Kalzium, Kalziumoxid, -hydroxid, -carbonat, - nitrat, -phosphat, bestehen.

Bekannte derartige Präparate werden nicht einzeln und gemischt eingesetzt, um den Nährstoffbedarf der Nutzpflanzen und des Bodens zu verbessern oder die Luft-, Wasser- und Nährstoff-Speicherkraft des Bodens zu verbessern. Die bekannten Präparate weisen in der Regel eine spezifische Wirkung auf und es können die Anforderungen an eine Wirksamkeit gegen Krankheiten mit Nährstoffversorgung erfüllt werden.

Aufgabe der vorliegenden Erfindung ist es, ein Präparat der einleitend genannten Art anzugeben, dass bei einer Vielzahl von Anwendungen eine optimale Wirksamkeit gegen Krankheiten bereitstellt.

Diese Aufgabe wird erfindungsgemäß dadurch gelöst, daß die erste Komponente mindestens einen Anteil von Pyrophosphat aufweist.

Insbesondere ist vorgesehen, dass eine Verwendung von Pyrophosphaten (NH4, K, Na u. andere) allein durch Applikation als Granulat, Paste oder Flüssigkeit vorgesehen ist und dass auch zusätzlich anorganische Mineralstoffe, Salze, Säuren oder Laugen und oder eine organische Komponente auch als Algenmaterial (wie z.B. Braunalgen, Rotalgen aller Arten), Aminosäuren, Huminsäuren oder sonstige org. Verbindungen enthalten sein können.

Die obigen Komponenten allein oder und in Kombinationen können zusätzlich mit bekannten und in der Praxis angewandten Düngern gemischt werden, um eine breitere und/oder längere Wirkung zu erzielen.

Die Präparate können als feste oder flüssige Mittel zum Spritzen, Sprühen oder als Granulat formuliert werden. Die Präparate können darüber hinaus auch als Paste zum Streichen sowie als feste Formulierung zum streuen realisiert sein.

Als Beispiel sind folgende Verbindungen und Salze zu erwähnen:

Als Komponente des Präparates können flüssige oder feste natürliche oder synthetische, organische oder anorganische Verbindungen und Mischungen verwendet werden, die eine Stärkung der Pflanzen, ein erhöhtes Wachstum und Verbesserung der Gesundheit der Pflanzen gegenüber Pilzkrankheiten und/oder Ertragssteigerung und bessere Qualität und Ernährung bewirken.

Verwendbar sind beispielsweise NH4-, K-, Na- und andere Pyrophosphate (NH4)4 P207, K4 P207, Na4 P207 u. a. X-P207-Verbindungen.
a) Algenmaterialien wie zum Beispiel frische Algen oder Algenteile, Algenmehle aus verschiedenen Arten und verschiedener Herkunft, insbesondere Braunalgen sowie Rotalgen in Rohform oder verarbeitet.
b) Algenextrakte und Pasten in allen möglichen Präsentationen wie Blattdünger, Wachstumsförderer, Pflanzenstärkungsmittel, Bodendünger und Bodenverbesserer etc.
c) Alginate-, Pektinate-, und andere Polysaccharidsalze wie Na, Ca, Cu, K, Mg, Mn, Fe, NH4, usw.
d) Aminosäuren einzeln oder in Mischungen, aus tierischer, pflanzlicher oder synthetischer Herkunft.
e) Zucker und Polysaccharide wie Melasse oder zuckerhaltige Extrakte und Stoffe.
f) Produkte aus Pflanzenmaterial, Sud, Brei, Extrakte etc.
g) Organische und anorganische Materialien wie Wirtschaftsdünger, Komposte, Wurmhumus, organische und anorganische Dünger, Spurenelemente, Bodenverbesserer, Strukturverbesserer, Tonmineralien, Sande, Silizium, Kolloidbildner, slow-release Formulierungshilfsstoffe, synthetische organische und anorganische Substanzen sowie Erden.
h) Torf, Humus und Huminsäure aus Braun- und Steinkohle.

Als zweite oder dritte Komponente können Säuren, Laugen und ihre organischen und anorganischen Salze, Schwefel, Schwefelsäure, Schwefligesäure, Phosphor, Phosphorsäure, Phosphorige Säure, Salpetersäure, Salzsäure, Chlor, Kalium, Kalilauge, Kaliumoxid, -hydroxid, Natrium , Natriumoxid, - hydroxid, Natronlauge, Kalzium, Kalziumlauge, Ammoniak, Amoniumlauge, die eine Düngewirkung und resistenzfördernde Eigenschaften aufweisen, verwendet werden.

### Verwendbar sind beispielsweise:

| | | |
|---|---|---|
| a) | Phosphorsäure | H3PO4 |
| aa) | Calziumphosphat | Ca3(PO4)2 |
| ab) | Calziummonophosphat | CaHPO4 |
| ac) | Calziumdiphosphat | Ca(H2PO4)2 |
| ad) | Trippelkalziumphosphat | |
| af) | Kaliumphosphat | K3PO4 |
| ag) | Monokaliumphosphat | KH2PO4 |
| ah) | Dikaliumphosphat | K2HPO4 |
| ai) | Tetrakaliumphosphat | K4P2O7 |
| aj) | Kaliumpolyphosphat | |
| ak) | Natriumphosphat | Na3PO4, |
| al) | Mononatriumphosphat | NaH2PO4 |
| am) | Dinatriumphosphat | Na2HPO4 |
| an) | Tetranatriumphosphat | Na4P2O7 |
| ao) | Natriumpolyphosphat | |
| b) | Phosphorige Säure | H3PO3 |
| ba) | Phosphorige Säure und deren Salzen | |
| c) | Schwefel | S |
| ca) | Schwefelsäure | H2SO4 |
| cb) | Sulfate | CaSO4, MgSO4, K2SO4, |
| | NH4SO4, CuSO4, ZnSO4, FeSO4 (II und III-wertig) | |
| cd) | Sulfite, Sulfide und Thiosulfate K2S2O3, NH4)2S2O3, NH4)2S, K2S, H2S | |
| e) | Salpetersäure | HNO3 |
| ea) | Kaliumnitrat | KNO3 |
| eb) | Natriumnitrat | NaNO3 |
| ec) | Kalziumnitrat | CaNO3)2 |
| ed) | Amoniumnitrat | NH4NO3 |
| ef) | Amoniumsulfat | NH4)2SO4 |
| eg) | Amoniumcarbonat | NH4)2CO3 |
| ef) | Amoniumphosphat | NH4)3PO4 |
| ei) | Monoamoniumphosphat | NH4H2PO4 |
| ej) | Diamoniumphosphat | NH4)2HPO4 |
| eh) | Amoniumpyrophosphat | NH4)4 P2O7 |
| ek) | Natriumpyrophosphat | Na4 P2O7 |
| f) | Magnesiumoxid | MgO |
| fa) | Magnesiumhydroxid | Mg(OH)2 |
| fb) | Magnesiumsulfat | MgSO4 |
| fc) | Magnesiumnitrat | MgNO3)2 |
| fd) | Magnesiumcarbonat | MgCO3 |
| ff) | Magnesiumphosphat | MgHPO4 |
| g) | Kalziumoxid | CaO |
| ga) | Kalziumhydroxid | Ca(OH)2 |
| gb) | Kalzimcarbonat | CaCO3 |
| gc) | Kalziumnitrat | CaNO3 |
| gd) | Kalziumsulfat | CaSO4 |
| ge) | Kalziumphosphat Ca2H2PO4 | Ca)3PO4)2, CaHPO4, |
| gf) | Kalziumpyrophosphat | Ca2 P2O7 |

Die Wirksamkeit ergibt sich aus den nachfolgend erläuterten Versuchen.

In beigefügten Tabellen sind charakteristische Daten zu den nachfolgenden Beispielen zusammengefasst.
Es zeigen im einzelnen:
- Tabelle 1: Ergebnisse 2005 Mehltau -Befall an Rosen (3 wöchige Applikation)
- Tabelle 2: Ergebnisse 2005 Mehltau -Befall an Rosen (3 wöchige Applikation)
- Tabelle 3:: Ergebnisse 2005 Mehltau -Befall an Gurken (3 wöchige Applikation)

### Wirkung der ersten Komponenten

Die Wirkung von Pyrophosphaten (K-, Na-, NH4- und andere Pyrophosphate) als Düngemittel und Pflanzenschutz bzw. Stärkungsmittel war bislang unbekannt.

### Wirkung der zweiten Komponenten

Die Wirkung der Algenmehle, aufgeschlossene und nicht aufgeschlossene mit und ohne Aminosäuren, auf die Verbesserung des Wachstums und der Gesundheit der Pflanzen ist bekannt.

### Wirkung der dritten Komponenten

Die Wirkung von Säuren und Salzen von Phosphor, Stickstoff, Kalium, Kalzium, Magnesium, Schwefel, Eisen, Mangan und Spurennährelementen auf die Pflanzen ist als Dünger ebenfalls bekannt.

### Wirkung der Kombinationsprodukte: Tabelle 3

Pyrophosphate, Phosphate sowie Salze, Säuren und oder Laugen des Phosphor, Kalium, Stickstoff, Magnesium, Eisen, Schwefel haben Düngereffekte auf Boden und Pflanzen. Die Mischungen aus oben genannten Verbindungen, 1:1-Teile mit aufgeschlossenen und nicht aufgeschlossen Algenmehl - Extrakten führen zu induzierter Resistenz der Pflanzen gegenüber Krankheiten um ein Mehrfaches der einzelnen Stoffe und sind wirksamer als Düngemittel (NPK-Volldünger) und als Algenmehl (und oder Extrakte) aufgeschlossen oder nicht aufgeschlossen mit und ohne Aminosäuren. Die Blätter der Pflanzen sind dicker, kräftiger, dunkelgrüner, gesunder, weniger mit Pflanzenkrankheiten, wie mit Mehltau, befallen und nachhaltiger im Wachstum als alle Varianten. Das entscheidende ist dabei, dass die Gesundheit der Pflanzen stark zunimmt, bei gutem Wachstum der Pflanzen.

### Aufwandmenge:

Die oben genannten Produkte, mit Ausnahme der Algenmehle, aufgeschlossen oder nicht aufgeschlossen, können einen Gehalt an Phosphor (P205)) von 1 bis 58 %, Stickstoff (N) von 1 bis 30 %, Kalium (K20) von 1 bis 56 % und Schwefel 2 bis 30 % aufweisen.

### Resultate:

Beispiel 1: die Mehltauresistenz der Rosen ist aus den Resultaten der Tabellen 1 in den Jahren 2005 ersichtlich.
Beispiel 2: die Mehltauresistenz der Gurken ist aus den Tabellen 2 und 3 deutlich zu entnehmen. (Versuche 2005)
Beispiel 3: der Vergleich der Einzelstoffe Pyrophosphate und in den Kombinationen mit Algenextrakt bzw. Aminosäuren kann man aus der Tabelle 5 entnehmen. Die Tabelle zeigt eindeutig, dass die Kombinationen eine Verbesserung der Resistenz der Pflanzen gegenüber Pflanzenkrankheiten und eine bessere Ernährung bewirken.
Während die Widerstandskraft durch NPK-Dünger nicht verbessert wird, zeigt die Kombination mit Algenextrakten eine deutliche Wirkung, da die Versorgung der Pflanzen mit Nährstoffen durch den Schutzmechanismus der Alginate besser reguliert wird. Durch die behutsame Ernährung der Pflanzen bleiben sie gesünder als durch schockartige Überdosierung. Auch die Unschädlichkeit der Kombination aus den oben genannten Stoffen mit aufgeschlossenem Algenmehl ist hervorzuheben.

Die Produkte können als Granulate gestreut oder als flüssige Mittel zum Spritzen, Sprühen, Gießen formuliert werden. Sie können auch mit Hilfsmitteln formuliert werden, die einen slow-release- Effekt bewirken.

Im Hinblick auf die ersten Komponenten des Präparates erwiesen sich zum Spritzen, Gießen oder Tauchen insbesondere Mischungen aus Algenextrakten mit Aminosäuren als vorteilhaft. Die Verwendung von Melasse sowie Spurennährelementen ist ebenfalls von Vorteil.

Im Hinblick auf eine Streufähigkeit der Präparate erwiesen sich insbesondere Mischungen aus granulierten Algenprodukten als vorteilhaft. Darüber hinaus ist die Verwendung von Tonmineralen, Düngern, beziehungsweise von Spurennährelementen oder organischen Materialien erfolgreich. Als organische Materialien sind insbesondere Humus, Huminstoffe, Komposte sowie Rindenmulch gemeint.

Bei der Verwendung von Salzen als zweite Komponente des Präparates kann über die jeweilige chemische Zusammensetzung des Salzes die Löslichkeit sowie die Wirkungsgeschwindigkeit beeinflusst werden. Eine langfristige Wirkung wird durch Zusatz von Natrium, Kalium, Ammonium, Kalzium oder deren Säuren und Laugen unterstützt. Spurennährelemente wie Kupfer, Zink, Mangan, Molybdän usw. sind zur Sicherung der Ernährung der Pflanzen vorteilhaft. Bewährt haben sich alle Phosphat-Verbindungen und NH4-, K-, Na- und andere Pyrophosphate in der Kombinationen mit Algen-Extrakten, aufgeschlossenen und nicht aufgeschlossenen Algen sowie Aminosäuren und anderen organischen Stoffen wie Huminstoffe, Melasse, Vinasse, Kompost usw.

Im Hinblick auf die Zusammensetzung der Präparate soll noch einmal darauf hingewiesen werden, dass insbesondere ein Zusatz von Polysacchariden in aufgeschlossenen Algen zu einer gezielten Widerstandsfähigkeit, zum Schutz der Nährstoffe vor Auswaschung und Fixierung sowie zu einer kontinuierlichen Dosierung der Nährstoffe an die Pflanzen führt, die die Gesundheit der Pflanzen fördert und dem Boden Fruchtbarkeit verleiht. Darüber hinaus verstärken Säuren, Laugen und Salze, die nur in dieser Zusammensetzung mit Algen formuliert oder granuliert sind, die Pflanzenverträglichkeit.

Die Verwendung von Algenmaterial erweist sich gegenüber einer Verwendung von technischen Alginaten als vorteilhaft, da andere Herstellungsverfahren zur Anwendung kommen, die hier bei der Herstellung von Algenprodukten weniger aggressiv sind als bei der Herstellung von technischen Alginaten. Die natürlichen Produkteigenschaften werden durch das erfindungsgemäße Verfahren nicht beeinträchtigt.

Besonders vorteilhaft bei der vorliegenden Erfindung ist eine kombinierte Verwendung von Polyphosphat und Phosphat. Es kann hierdurch eine harmonische Düngung und eine harmonische Aufnahme des Düngers durch die Pflanzen erreicht werden. Hierbei ist die jeweilige Löslichkeit wesentlich. Durch die erläuterten Präparatkombinationen wird eine Wirkungsverstärkung erreicht.

Ebenfalls von Bedeutung ist die fungizide Wirkung von Pyrophosphat allein oder in Kombination mit anderen erwähnten Substanzen. Die Präparatzubereitung kann insbesondere in Form von Flüssigpräparaten als Lösung erfolgen. Typischerweise werden 50% konzentrierte Pyrophosphatlösung und 50% konzentrierte Phosphatlösung miteinander gemischt. Auch eine Applikation in Festform ist möglich.

Zur Erreichung der fungiziden und gleichzeitig düngenden Wirkung können die vorstehend erläuterten Einzelpräparate in unterschiedlichen Kombinationen miteinander gemischt werden. Beispielsweise ist es möglich, die erwähnten Pyrophosphate allein oder in Kombination von unterschiedlichen Pyrophosphaten miteinander zu verwenden. Ein oder mehrere Pyrophosphate können mit einem oder mehreren der erläuterten Phosphate kombiniert werden. Beispielsweise mit Kaliumphosphat oder Ammoniumphosphat. Ebenfalls ist eine Kombination mit den Phosphiten möglich.

Die Pyrophosphate können ebenfalls allein oder in Kombination mit Phosphaten mit einer der erwähnten Schwefel-, Stickstoff-, Eisen-, Kalzizum-, Magnesium-, Kupfer-, Zink-, Mangan- oder Molybdänverbindungen kombiniert werden.

Ebenfalls ist an eine Kombination eines oder mehrerer Pyrophosphate mit Algen oder anderen organischen Materialien gedacht, wobei auch hier die Phosphate und/oder die oben erwähnten zusätzlichen Verbindungen hinzutreten können. Bei den organischen Materialien ist insbesondere auch an die Huminsäuren, die Komposte und Extrakte, sowie an allgemeines pflanzliches oder tierisches Material, beispielsweise auch in der Extraktform, gedacht.

Umfaßt ist ebenfalls die Kombination von Pyrophosphaten mit Aminosäuren tierischen oder pflanzlichen Ursprungs, wobei auch hier die Phosphate, die oben aufgeführten Spezialverbindungen und/oder die Algen und Algenmaterialien oder sonstigen organischen Materialien hinzutreten können.

Zu allen oben aufgeführten Substanzmischungen können mineralische Materialien wie Gesteinsmehle oder organische Materialien wie Mist, Stroh, Torf, Treber, Schredder oder Maische hinzugesetzt werden.

**Tabelle 1**

| Ergebnisse 2005 Mehltau -Befall an Rosen (3 wöchige Applikation) | | | | | | | | |
|---|---|---|---|---|---|---|---|---|
| Algenextrakt + Aminosäuren + K-Phosphate + K-Pyrophosphat (= Mischung) im Vergleich | | | | | | | | |
| | | | | | | | | |

| Bonitur | Kontrolle | Algenextrakt | Aminosäuren | K-Phosphate | K-Pyrophosphat | Mischung K-Phosphate K-Pyrophosphat | Mischung K-Phosphate K-Pyrophosphat Algenextrakt | Mischung K-Phosphate K-Pyrophosphat Algenextrakt Aminosäuren |
|---|---|---|---|---|---|---|---|---|
| Applikation | 0 | 0 | 0 | 0 | 0 | 0 | 0 | 0 |
| 4 Wochen | 0 | 0 | 0 | 0 | 0 | 0 | 0 | 0 |
| 8 Wochen | 50 % | 45 % | 45 % | 38 % | 28 % | 10 % | 5 | 3 |
| 16 Wochen | 70 % | 60 % | 60 % | 55 % | 40 % | 15 % | 10 | 5 |

**Tabelle 2**

| Ergebnisse 2005 Mehltau -Befall an Rosen (3 wöchige Applikation) | | | | | | | | |
|---|---|---|---|---|---|---|---|---|
| Algenextrakt + Aminosäuren + K-Phosphate + K-Pyrophosphat (= Mischung) im Vergleich | | | | | | | | |
| | | | | | | | | |

| Bonitur | Kontrolle | Algenextrakt | Aminosäuren | K-Phosphate | K-Pyrophosphat | Mischung K-Phosphate K-Pyrophosphat | Mischung K-Phosphate K-Pyrophosphat Algenextrakt | Mischung K-Phosphate K-Pyrophosphat Algenextrakt Aminosäuren |
|---|---|---|---|---|---|---|---|---|
| Applik ation | 0 | 0 | 0 | 0 | 0 | 0 | 0 | 0 |
| 4 Wochen | 0 | 0 | 0 | 0 | 0 | 0 | 0 | 0 |
| 8 Wochen | 40 % | 32 % | 38 % | 28 % | 15 % | 8 % | 3 | 1 |
| 16 Wochen | 55 % | 45 % | 50 % | 40 % | 25 % | 10 % | 7 | 3 |

**Tabelle 3**

| Ergebnisse 2004 Mehltau -Befall an Gurken (3 wöchige Applikation) | | | | | | |
|---|---|---|---|---|---|---|
| Algenextrakt + Aminosäuren + K-Phosphate + K-Pyrophosphat (= Mischung) im vergleich | | | | | | |
| | | | | | | |

| Mittel | Dosis | Pflanzenwachstum | Schäden | Mehltaubefall Vor d. Anwendung | Mehltaubefall 10 Wochen später | Schäden 10 W. später |
|---|---|---|---|---|---|---|
| Kontrolle | Wasser | Normal | keine | 0 | 50 % | Keine |
| Alginat 10 % | 1 %ig | Normal | keine | 0 | 45 % | Keine |
| Aminosäuren 10 % | 1 %ig | Normal | keine | 0 | 46 % | Keine |
| K-Phosphat konzentriert | 1 %ig | Düngereffekt | keine | 0 | 40 % | Keine |
| K-Pyrophosphat konzentriert | 1 %ig | Düngereffekt | keine | 0 | 30 % | Keine |
| K-Phosphat konzen-triert + K-Pyrophosphat Konzentriert | 1 % ig | Düngereffekt Wachstumsverbesserung | keine | 0 | 20 % | Keine |
| Alginat +Aminosäur en 10 % | 1 %ig | Leichte Wachstums-Verbesserung | keine | 0 | 35 % | Keine |
| Alginat 10 % +Aminosäur en 10 % + K-Phosphat konzentriert | 1 %ig | grün, breite Blätter, gutes Wachstum | keine | 0 | 25 % | Keine |
| Alginat 10 % +Aminosäur en 10 % + K-Phosphat konz. + K-Pyrophosphat konz. | 1 %ig | dunkelgrün, breite Blätter, kräftiges Wachstum | Keine | 0 | 3 % | Keine |
| Alginat 10 % +Aminosäur en 10 % + K-Phosphat konz. + K-Pyrophosphat konz. + Düngersalze | 1 %ig | dunkelgrün, breite Blätter, kräftiges Wachstum | Keine | 0 | 2 % | Keine |
| Alginat 10 % +Aminosäur en 10 % + K-Phosphat konz. + K-Pyrophosphat konz. + Säure z.B. Phosphor | 1 %ig | dunkelgrün, breite Blätter, kräftiges Wachstum | Keine | 0 | 1 % | Keine |
| Alginat 10 % +Aminosäur en 10 % + K-Phosphat konz. + K-Pyrophosphat konz. + Lauge z.B. Kali | 1 %ig | dunkel-grün, breite Blätter, kräftiges Wachstum | Keine | 0 | 1 % | Keine |

## Patentansprüche

1. Präparat zur Bodenverbesserung und Düngung, das mindestens eine anorganische erste Komponente und mindestens eine organische zweite Komponente enthält, **dadurch gekennzeichnet, daß** die erste Komponente mindestens einen Anteil von Pyrophosphat aufweist.

2. Präparat nach Anspruch 1, **dadurch gekennzeichnet, daß** das Pyrophosphat mindestens einen Bestandteil aus der Gruppe K-, NH4- und Na- enthält.

3. Präparat nach Anspruch 1 oder 2, **dadurch gekennzeichnet, daß** das Präparat auf die Pflanzen gespritzt wird.

4. Präparat nach Anspruch 1 oder 2, **dadurch gekennzeichnet, daß** das Präparat im Boden angewendet wird.

5. Präparat nach einem der Ansprüche 1 bis 4, **dadurch gekennzeichnet, daß** eine anorganische dritte Komponente als eine Verbindung aus der Gruppe der Phosphor (auch Phosphite), Schwefel, Kalium (auch Sulfite), Stickstoff, Kalzium; Magnesium in Säure, Lauge oder Salze realisiert ist.

6. Präparat nach einem der Ansprüche 1 bis 5, **dadurch gekennzeichnet, daß** die organische zweite Komponente Verbindungen enthält, von denen mindestens eine aus der Gruppe der aufgeschlossenen oder nicht aufgeschlossen Algenmehle, Algenextrakte oder Pasten ausgewählt ist.

7. Präparat nach einem der Ansprüche 1 bis 6, **dadurch gekennzeichnet, daß** eine Verwendung zur Resistenzverbesserung, Düngung der Pflanzen oder Verbesserung der Bodenfruchtbarkeit (Nährstoffversorgung, Schutz vor Auswaschung und Fixierung, Optimierung der Luft- und Wasser-Versorgung) vorgesehen ist.

8. Präparat nach einem der Ansprüche 1 bis 7, **dadurch gekennzeichnet, daß** in der organischen Komponente Algenmaterial, insbesondere Braunalgen-Arten und/oder Rotalgen-Arten enthalten ist.

9. Präparat nach einem der Ansprüche 1 bis 8, **dadurch gekennzeichnet, dass** die organische zweite Komponente eine anorganische Komponente oder Komponenten enthält.

10. Präparat nach einem der Ansprüche 1 bis 9, **dadurch gekennzeichnet, dass** die zweite Komponente ein Produkt aus Landpflanzen enthält.

11. Präparat nach einem der Ansprüche 1 bis 10, **dadurch gekennzeichnet, dass** in der zweiten Komponente ein Produkt aus der Gruppe der Extrakte, Aufschlüsse, Brei, Säfte oder Mehle enthalten ist.

12. Präparat nach einem der Ansprüche 1 bis 11, **dadurch gekennzeichnet, dass** die zweite Komponente mindestens ein Polysaccharid enthält.

13. Präparat nach Anspruch 12, **dadurch gekennzeichnet, dass** das Polysaccharid aus der Gruppe Melasse, Pektine, Zucker sowie Salze realisiert ist.

14. Präparat nach einem der Ansprüche 1 bis 13, **dadurch gekennzeichnet, dass** die zweite Komponente einen Humus enthält.

15. Präparat nach Anspruch 14, **dadurch gekennzeichnet, dass** der Humus als ein Produkt aus der Gruppe der Huminstoffe, Komposte Rindenmulche sowie Holzschnittzel realisiert ist.

16. Präparat nach einem der Ansprüche 1 bis 16, **dadurch gekennzeichnet, dass** die zweite Komponente synthetische organische Verbindungen enthält.

17. Präparat nach einem der Ansprüche 1 bis 16, **dadurch gekennzeichnet, dass** die zweite Komponente Bestandteile aus Wasserpflanzen enthält.

18. Präparat nach einem der Ansprüche 1 bis 17, **dadurch gekennzeichnet, dass** die zweite Komponente Bestandteile aus Meereswasserpflanzen enthält.

19. Präparat nach einem der Ansprüche 1 bis 18, **dadurch gekennzeichnet, dass** die zweite Komponente Bestandteile aus Süßwasserpflanzen enthält.

20. Präparat nach einem der Ansprüche 1 bis 19, **dadurch gekennzeichnet, dass** die zweite Komponente aus der Gruppe der Algen, Extrakte, Breie, Mehle, Aufschlüsse und Alginate enthält.

21. Präparat nach einem der Ansprüche 1 bis 20, **dadurch gekennzeichnet, dass** die erste Komponente synthetische Verbindung enthält.

22. Präparat nach einem der Ansprüche 1 bis 21, **dadurch gekennzeichnet, dass** die erste Komponente ein Kolloid enthält.

23. Präparat nach einem der Ansprüche 1 bis 22, **dadurch gekennzeichnet, dass** die erste Komponente ein Silikatprodukt enthält.

24. Präparat nach einem der Ansprüche 1 bis 23, **dadurch gekennzeichnet, dass** die erste Komponente Erden enthält.

25. Präparat nach einem der Ansprüche 1 bis 24, **dadurch gekennzeichnet, dass** die erste Komponente Tonmineral enthält.

26. Präparat nach einem der Ansprüche 1 bis 25, **dadurch gekennzeichnet, dass** die erste Komponente Sande enthält.

27. Präparat nach einem der Ansprüche 1 bis 26, **dadurch gekennzeichnet, dass** die erste Komponente einen Dünger enthält.

28. Präparat nach einem der Ansprüche 1 bis 27, **dadurch gekennzeichnet, dass** die erste Komponente Spurennährelemente enthält.

29. Präparat nach einem der Ansprüche 1 bis 28, **dadurch gekennzeichnet, daß** die erste Komponente mindestens zwei Pyrophosphate aufweist.

30. Präparat nach einem der Ansprüche 1 bis 29, **dadurch gekennzeichnet, daß** die erste Komponente eine Mischung aus Pyrophosphat und Phosphat enthält.
